# NEUE EUROPÄISCHE PATENTSCHRIFT

(11) **EP 1 558 865 B2**
(45) Veröffentlichungstag und Bekanntmachung des Hinweises auf die Entscheidung über den Einspruch: **28.12.2011**
(45) Hinweis auf die Patenterteilung: 07.05.2008
(21) Anmeldenummer: 03776795.1
(22) Anmeldetag: 13.10.2003
(51) Int. Cl.: F16K 1/00

(54) **GASVENTIL**
GAS VALVE
VANNE A GAZ

(30) Priorität: 26.10.2002 DE 10249964
(43) Veröffentlichungstag der Anmeldung: 03.08.2005
(73) Patentinhaber: ROBERT BOSCH GMBH, 70442 Stuttgart (DE)
(72) Erfinder: HAFNER, Udo, 71638 Ludwigsburg (DE); HANS, Waldemar, 96050 Bamberg (DE); BRENNER, Frank, 71686 Remseck (DE); MILLER, Frank, 74360 Ilsfeld (DE); BANTLEON, Guenther, 71229 Leonberg (DE); NGUYEN-SCHAEFER, Thanh-Hung, 71679 Asperg (DE); VOGEL, Christof, 96120 Bischberg (DE); MOELLER, Martin, 70839 Gerlingen (DE); KRAPP, Norbert, 96146 Altendorf (DE)
(86) Internationale Anmeldenummer: PCT/DE2003/003386
(87) Internationale Veröffentlichungsnummer: WO 2004/040176

(56) Entgegenhaltungen:
- EP-A- 1 235 012
- EP-A2- 1 244 116
- DE-A- 3 504 092
- DE-A1- 3 716 402
- DE-A1- 4 444 782
- DE-A1- 19 731 557
- DE-A1- 19 905 722
- DE-B- 1 111 454
- FR-E- 56 161
- GB-A- 2 188 982
- US-A- 2 325 878
- US-A- 4 515 347
- US-A- 4 883 252
- US-A- 5 348 233
- US-A1- 2002 074 532

## Beschreibung

### Stand der Technik

Die Erfindung geht von einem Gasventil, insbesondere von einem Gasventil mit elektromagnetischer Betätigung, gemäß der im Oberbegriff des Patentanspruches 1 näher definierten Art aus.

Ein derartiges Gasventil ist aus der Praxis bekannt und beispielsweise als Gassteuerventil bei einer Brennstoffzelle einsetzbar.

Das bekannte Gasventil umfaßt ein Ventilgehäuse, in dem ein Ventilschließglied axial verschieblich geführt ist, das mit einer elektromagnetischen Betätigungseinheit verbunden ist. Das Ventilschließglied dient zur Steuerung eines Gasstroms von einer Zuströmseite zu einer Abströmseite und wirkt hierzu mit einem Ventilsitz zusammen, der an einer Ventilplatte ausgebildet ist. Die Zuströmseite ist mit einem das Ventilschließglied umgebenden Druckbereich verbunden. Beim Öffnen des Ventilschließglieds erfolgt ein Gasstrom von dem Druckbereich zu einer Bohrung der Ventilplatte, welche in eine Düse mündet, die zu der Abströmseite führt.

An der Stirnseite des Ventilschließglieds ist üblicherweise ein Dichtbund ausgebildet, der bei geschlossenem Ventilschließglied auf eine Dichtplatte aufsetzt und eine zylindrische Bohrung der Dichtplatte umgibt. Bei geschlossenem Ventilschließglied herrscht zwischen dem das Ventilschließglied umgebenden Druckbereich und dem an die Stirnseite des Ventilschließglieds grenzenden Ventilraum eine große Druckdifferenz, so daß die zum Öffnen des Ventilschließglieds erforderliche Magnetkraft groß ausgelegt sein muß.

Des weiteren haben Gase, wie Wasserstoff oder Methan, im Vergleich zu flüssigen Kraftstoffen eine geringere Dichte. Daher ist bei Gasen häufig ein wesentlich gößerer Volumenstrom erforderlich, so daß bei einem Gaseventil eine große Durchstromfläche am Ventildichtsitz wünschenswert ist. Hierbei ist zu beachten, daß der Ventilhub wegen der hohen Dynamik des Ventils begrenzt ist, was zur Folge hat, daß der Dichtsitz im wesentlichen hinsichtlich seines Durchmessers veränderbar ist. Eine Vergrößerung des Dichtsitzes führt aber zu einer Erhöhung der aufzubringenden Öffnungskraft bzw. Magnetkraft, was wiederum einen erhöhten Stromverbrauch zur Folge hat. Ferner kann der Durchmesser des Dichtsitzes aufgrund eines häufig beschränkten Bauraums nicht beliebig groß gewählt werden. Die Volumenströme bzw. Massenströme des strömenden Gases sind aus diesen Gründen häufig nicht hinreichend groß für die bei Gasmotoren und Brennstoffzellenantrieben herrschenden Anforderungen.

### Vorteile der Erfindung

Das Gasventil nach der Erfindung mit den Merkmalen nach dem Oberbegriff des Patentanspruches 1, bei dem die Zuströmseite stromab mit einem inneren und einem äußeren Druckbereich verbunden ist, welche Druckbereiche stromauf des Ventilsitzes angeordnet sind, wobei der innere Druckbereich einen axialen Druckkanal des Ventilschließglieds umfaßt, der an der freien Stirnseite des Ventilschließglieds axial austritt, und der äußere Druckbereich das Ventilschließglied umgibt, hat den Vorteil, daß das Ventilschließglied mit geringem Kraftaufwand betätigbar ist, da bei dessen Öffnen in dem inneren und in dem äußeren Druckbereich im wesentlichen der gleiche Druck herrscht und aus beiden Druckbereichen Gas in Richtung der Durchströmöffnung strömt. Dies hat gegenüber einem Gasventil nach dem Stand der Technik den Vorteil, daß eine insbesondere elektromagnetische Betätigungseinheit für das Ventilschließglied mit geringerer Leistung auslegbar ist.

Ein Ventil gemäß dem Stand der Technik ist aus dem Dokument US 2002/0074532 bekannt. Dieses Ventil hat einen axialen Druckkanal mit einem seitlichen Austritt und einem äußer Druckbereich, der das Ventilschließglied teilweise umgibt. Diese Merkmake verursacht ein Kraftungleich.

Bei dem Gasventil nach der Erfindung handelt es sich um ein Ventil, das nach dem Druckausgleichsprinzip arbeitet, hohe Massenströme zuläßt sowie nur geringe Kräfte zur Betätigung des Ventilschließglieds erfordert.

Das Gasventil nach der Erfindung ist insbesondere zur Massenstromregelung von Gasen wie Wasserstoff und Erdgas geeignet und kann beispielsweise bei einer Brennstoffzelle eingesetzt werden.

Das Gasventil nach der Erfindung ist zweckmäßig derart ausgelegt, daß das Ventilschließglied stirnseitig eine als Ringfläche ausgebildete Dichtfläche aufweist. Die Dichtfläche überdeckt bei geschlossenem Ventilschließglied die mindestens eine Durchströmöffnung.

Bei einem Gasventil gemäß der Erfindung ist der innere Druckbereich über mindestens einen in dem Ventilschließglied ausgebildeten Abströmkanal mit dem äußeren Druckbereich verbunden. Der Abströmkanal ist als radial ausgerichtete Bohrung des Ventilschließglieds ausgebildet, kann aber auch mit einem bestimmten Anstellwinkel in Strömungsrichtung gegenüber einer Achse des Ventilschließglieds geneigt sein und von einer als Zufuhrkanal dienenden axialen Bohrung an die Außenseite des Ventilschließglieds führen. Der Zufuhrkanal mündet dann auch in eine axiale Bohrung gegebenenfalls verminderten Durchmessers, die den inneren Druckbereich darstellt bzw. ein Teil dessen ist. Insbesondere bei dieser Ausführungsform ist zuverlässig gewährleistet, daß ein Druckausgleich zwischen dem inneren Druckbereich und dem äußeren Druckbereich erfolgt und somit die auf das Ventilschließglied wirkenden Fluidkräfte ausgeglichen sind.

Um einen möglichst homogenen Gasfluß zwischen den beiden Druckbereichen und der Abströmseite zu gewährleisten, hat die Ventilplatte mindestens zwei Durchströmöffnungen, die mittels der Dichtfläche abdeckbar sind. Beispielsweise kann die Ventilplatte auch vier Durchströmbohrungen aufweisen. Bei einer ringfömig ausgebildeten Dichtfläche sind die Durchströmöffnungen entlang einer Kreislinie angeordnet, deren Radius etwa dem mittleren Radius der Dichtfläche entspricht.

Die Durchströmöffnungen können als nierenförmige bzw. linsenförmige Durchbrüche oder auch als entlang der Kreislinie angeordnete Düsen ausgebildet sein. Im ersteren Fall ist es in der Regel üblich, stromab der Durchbrüche bzw. Kanäle und stromauf der Abströmseite eine beispielsweise an der Dichtplatte ausgebildete Drosselbohrung bzw. Düse anzuordnen, deren Dimensionen die zu der Abströmseite strömende Gasmenge festlegen. Wenn in dem inneren und dem äußeren Druckbereich beispielsweise ein Druck von etwa 8 bar herrscht, wirkt dieser Druck beim Öffnen des Ventilschließglieds durch die linsenförmigen Durchbrüche bis zu der Drosselbohrung. Mittels der Drosselbohrung wird der Druck auf beispielsweise 1 bar reduziert.

Bei Ausbildung der Durchströmöffnungen als nierenförmige bzw. linsenförmige Durchbrüche ist stromab derselben üblicherweise eine einen Totvolumenraum darstellende Zentralbohrung des Gasventils angeordnet, von wo aus das betreffende Gas über die Drosselbohrung mit Schall- bzw. Überschallgeschwindigkeit zu der Abströmseite strömt. Letztere kann einen Dämpfungsraum bilden oder auch an die Atmosphäre führen.

Die Querfläche der stromab des Totvolumenraums angeordneten Drosselbohrung ist zur Vermeidung eines Einflusses von Druckstößen auf den Dichtsitz bevorzugt um den Faktor 2,0 bis 2,5 kleiner als die Fläche der als nierenförmige bzw. linsenförmige Durchbrüche ausgebildeten Durchströmöffnungen.

Zur Verbesserung der Dynamik des Gasventils nach der Erfindung kann die zur Befüllung des Totvolumenraums erforderliche Zeit dadurch verringert werden, daß an der Dichtplatte ein vorzugsweise konisch ausgebildeter Absatz bzw. Sockel angeordnet ist, der in den Totvolumenraum ragt. Der Absatz mindert des weiteren die Ausbildung von Strömungswirbeln, die beim Öffnen des Ventilschließglieds, insbesondere bei kleinen Ventilhüben, durch Ablösung der Gasströmung entstehen können.

Bei Ausbildung der Durchströmöffnungen als Düsen kann auf die Nachschaltung einer Drosselbohrung verzichtet werden, da durch entsprechende Auslegung der Düsen der an der Abströmseite wirkende Gasdruck einstellbar ist.

Die Dichtplatte kann aus unterschiedlichen Materialien, wie beispielsweise Stahl, PEEK mit Kohlefasern, einem Hartkunststoff oder einer Keramik, hergestellt sein, und zwar beispielsweise nach einem Ätz-, einem Erodier- oder einem Laserverfahren.

Das Gasventil nach der Erfindung kann zur Dichtigkeitserhöhung am Ventilsitz eine Elastomerdichtung umfassen. Diese ist zweckmäßig an der an der Stirnseite des Ventilschließglieds liegenden Dichtfläche angeordnet und kann eine oder auch mehrere Dichtlippen aufweisen.

Zweckmäßig ist die Elastomerdichtung ringförmig ausgebildet und an dem Ventilschließglied an dessen Stirnseite in eine korrespondierende Ringnut eingebettet. Sie kann mit zwei Dichtlippen versehen sein, von denen eine am inneren Rand des Dichtrings angeordnet und damit dem inneren Druckbereich zugeordnet und die andere am äußeren Rand des Dichtrings angeordnet und damit dem äußeren Druckbereich zugeordnet ist.

Des weiteren kann das Gasventil nach der Erfindung einen als Anschlag für das Ventilschließglied dienenden Sockel aufweisen. Dieser ist beispielsweise an der Ventilplatte ausgebildet. Der Anschlag stellt einen Prallabfänger dar und begrenzt die Verformung des elastomeren Dichtrings und damit dessen Verschleiß und definiert den Luftspalt an einem zur Betätigung des Ventilschließglieds dienenden Magnetanker eindeutig. Bei einem in einer Nut eingebetteten Dichtring mit Dichtlippen ist es denkbar, daß das Ventilschließglied selbst einen Schutzring bzw. Prallabfänger zur Schonung des Dichtrings bildet.

Um in der Schließstellung des Ventilschließglieds eine hohe Dichtigkeit zu gewährleisten, können an der Dichtplatte auch Schürzen zur Auflage der Elastomerdichtung ausgebildet sein. Diese Schürzen bilden beispielsweise die Ränder der Düsen.

Weitere Vorteile und vorteilhafte Ausgestaltungen des Gegenstandes nach der Erfindung sind der Beschreibung, der Zeichnung und den Patentansprüchen entnehmbar.

Zeichnung

Fünf Ausführungsbeispiele eines Gasventils nach der Erfindung sind in der Zeichnung schematisch vereinfacht dargestellt und werden in der nachfolgenden Beschreibung näher erläutert. Es zeigen
Figur 1 einen Längsschnitt durch ein Gasventil nach der Erfindung mit einer Düsenplatte;
Figur 2 eine Aufsicht auf die Düsenplatte des Gasventils nach Figur 1;
Figur 3 eine zweite Ausführungsform eines Gasventils nach der Erfindung mit einer Düsenplatte;
Figur 4 einen Schnitt durch einen Dichtbereich des Gasventils nach Figur 3 in vergrößerter Darstellung;
Figur 5 eine Figur 4 entsprechende Ansicht, jedoch mit einem veränderten Dichtbereich;
Figur 6 einen Schnitt durch ein Gasventil nach der Erfindung mit einer sogenannten Nierenplatte;
Figur 7 eine Aufsicht auf die Nierenplatte des Gasventils nach Figur 6;
Figur 8 einen Schnitt durch die Nierenplatte nach Figur 7 entlang der Linie VIII-VIII in Figur 7;
Figur 9 eine Aufsicht auf eine alternative Ausführungsform einer Nierenplatte; und
Figur 10 einen Schnitt durch die Nierenplatte nach Figur 9 entlang der Linie X-X in Figur 9.

### Beschreibung der Ausführungsbeispiele

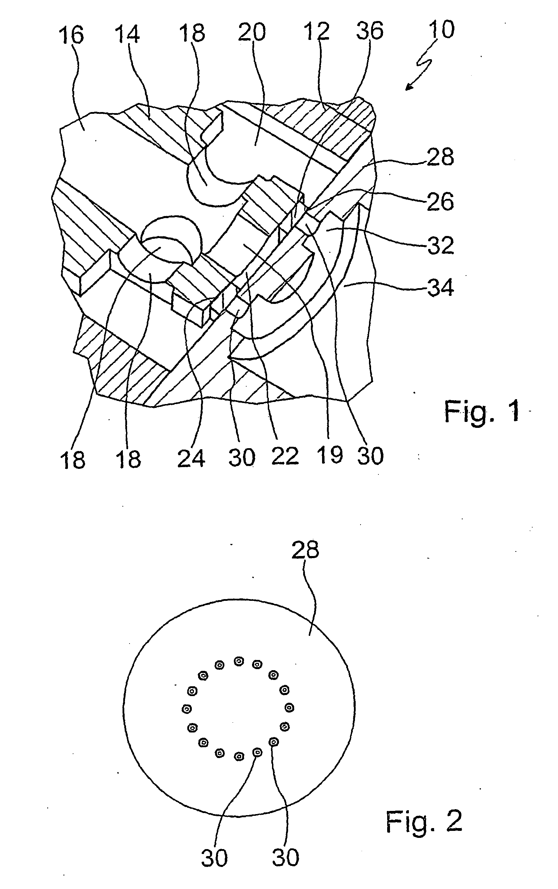

In Figur 1 ist ein Gasventil 10 zum Einsatz bei einer Brennstoffzelle oder einem Gasmotor dargestellt, das zur Regelung eines Wasserstoffstroms bzw. eines NG(natural gas)-Gasstroms dient.

Das Gasventil 10 umfaßt ein Gehäuse 12, in welchem ein Ventilschließglied 14 in einer langen, von dem Gehäuse 12 gebildeten Führung axial verschieblich geführt ist, das mit einer hier nicht näher dargestellten elektromagnetischen Betätigungseinheit in Wirkverbindung steht und mit einem Gleitlack beschichet ist.

Das Ventilschließglied 14 umfaßt eine als Zufuhrkanal dienende, erste Axialbohrung 16, die mit einer hier nicht dargestellten Zuströmseite des Gasventils 10 verbunden ist. Von der ersten Axialbohrung 16 zweigen vier über den Umfang des Ventilschließglieds 14 verteilte Radialbohrungen 18 ab, die jeweils eine radiale Abströmbohrung bilden und von denen in Figur 1 drei dargestellt sind und die zu einem sogenannten äußeren Druckbereich 20 führen, der an die Außenseite des Ventilschließglieds 14 grenzt. In axialer Richtung mündet die erste Axialbohrung 16 in eine zweite, einen Druckkanal darstellende Axialbohrung 19, deren Durchmesser geringer als der Durchmesser der ersten Axialbohrung 16 ist und die an der freien Stirnseite 24 des Ventilschließglieds 14 austritt. Die zweite Axialbohrung 19 geringeren Durchmessers, die eine axiale Abströmbohrung darstellt, bildet einen sogenannten inneren Druckbereich 22 bzw. ist Teil desselben.

Beim Betrieb des Gasventils 10 strömt Gas aus der ersten Axialbohrung 16 über die radialen Abströmbohrungen 18 in den einen Gasraum darstellenden, äußeren Druckbereich 20 und über die axiale Abströmbohrung 19 an die freie Stirnseite 24 des Ventilschließglieds 14.

Sowohl der innere Druckbereich 22 als auch der äußere Druckbereich 20 sind stromauf eines Ventilsitzes 26 angeordnet, der mit der freien Stirnseite 24 des Ventilschließglieds 14 zusammenwirkt und an einer als Dichtplatte bzw. Dichtsitzscheibe dienenden Düsenplatte 28 ausgebildet ist, die mit dem Ventilschließglied 14 zusammenwirkt.

In der Düsenplatte 28 sind, wie Figur 2 zu entnehmen ist, entlang einer Kreislinie vierzehn axial ausgerichtete, als Durchströmöffnungen dienende Düsen 30 ausgebildet, die über eine Ringnut 32 zu einer Abströmseite 34 des Gasventils 10 führen und eine abgerundete Einströmkante mit einem Krümmungsradius von 0,05 mm haben. Die Düsen 30 sind jeweils so ausgelegt, daß das Verhältnis ihrer Länge zu ihrem Durchmesser etwa 0,7 beträgt. Dies bewirkt ein optimales Strömungsverhalten des durch die Düsen 30 strömenden Gases.

Die Stirnseite 24 des Ventilschließglieds 14 ist als Ringfläche ausgebildet, an der eine aus einem elastomeren Werkstoff gefertigte Ringdichtung 36 eingebettet ist. Die Ringdichtung 36 schließt in Schließstellung des Ventilschließglieds 14 die Düsen 32 ab, so daß ein Gasstrom von den Druckbereichen 20 und 22 zu der Abströmseite gesperrt ist.

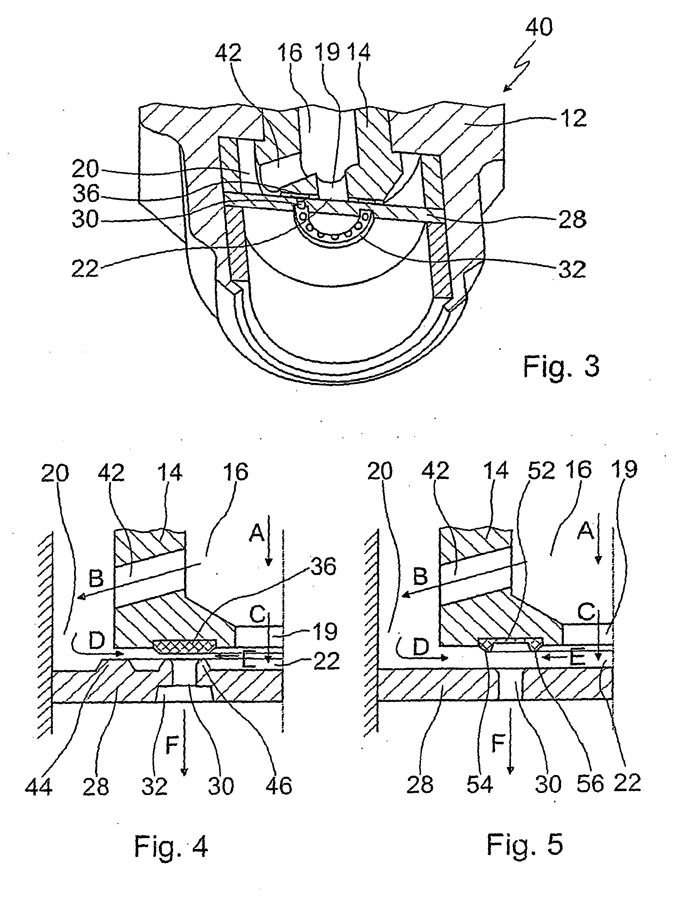

In Figur 3 ist ein Gasventil 40 dargestellt, das im wesentlichen demjenigen nach Figur 1 entspricht. Das Gasventil 40 unterscheidet sich von dem Gasventil nach Figur 1 jedoch durch die Ausbildung des Ventilschließglieds 14, und zwar dadurch, daß es nicht mit radial ausgerichteten Abströmbohrungen versehen ist, sondern neben der axialen Abströmbohrung 19 winklig gegenüber der Längsachse des Ventilschließglieds 14 ausgerichtete Abströmbohrungen 42 aufweist, die zu dem äußeren Druckbereich 20 führen, was ein optimiertes Strömungsverhalten des betreffenden Gases bewirkt.

Der Dichtbereich des Gasventils 40 ist in Figur 4 detailliert dargestellt. Er zeichnet sich dadurch aus, daß die Düsenplatte 28 einen gegebenenfalls ringförmigen Sockel 44 aufweist, der als Anschlag für das Ventilschließglied 14 dient und im Randbereich des letzteren angeordnet ist.

Des weiteren weist die Düsenplatte 28 an den Düsen 30 jeweils als Dichtlippe dienende Schürzen 46 auf, die bei geschlossenem Ventilschließglied 14 in die ringförmige Elastomerdichtung 36 eingreifen, die in eine Ringnut des Ventilschließglieds eingebettet ist. Zur Optimierung der Strömungsbedingungen sind die Kanten der Elastomerdichtung 36 angeschrägt und die Einströmkanten der Düsen 30 mit einem Krümmungsradius von etwa 0,05 mm abgerundet.

Die Strömung des betreffenden Gases in dem Gasventil 40 ist ebenfalls Figur 4 zu entnehmen. Das Gas strömt von der Zuströmseite gemäß einem Pfeil A durch die erste Axialbohrung 16 des Ventilschließglieds 14 und von dort zum einen durch die Abströmkanäle 42 gemäß einem Pfeil B in den äußeren Druckbereich 20 und zum anderen gemäß einem Pfeil C durch die zweite Axialbohrung 19, die Teil des inneren Druckbereichs 22 ist. Beim Öffnen des Ventilschließglieds 14 strömt Gas aus dem äußeren Druckbereich 20 gemäß einem Pfeil D und aus dem inneren Druckbereich 22 gemäß einem Pfeil E zu den Düsen 30 und über diese gemäß einem Pfeil F zu der Abströmseite des Gasventils 40.

In Figur 5 ist eine alternative Ausführungsform eines Dichtbereichs bei einem Gasventil der in Figur 3 dargestellten Art gezeigt. Der Dichtbereich nach Figur 5 unterscheidet sich von demjenigen nach Figur 4 dadurch, daß er einen Dichtring 52 aufweist, der mit zwei Dichtlippen 54 und 56 versehen ist, die am inneren bzw. am äußeren Rand des Dichtrings 52 angeordnet sind. Die Dichtlippen 54 und 56 greifen bei geschlossenem Ventilschließglied 14 an der Dichtplatte 28 an, die hier ohne Anschlagsockel sowie ohne Schürzen ausgebildet ist.

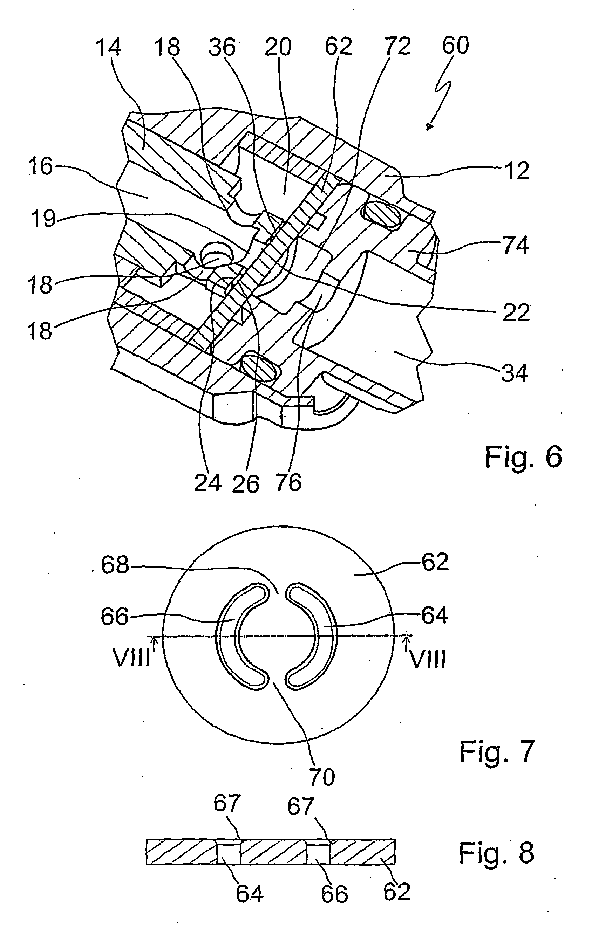

In den Figuren 6 bis 8 ist eine weitere Ausführungsform eines Gasventils 60 dargestellt, das weitgehend dem Gasventil nach Figur 1 entspricht, sich von diesem aber dadurch unterscheidet, daß es nicht mit einer Düsenplatte sondern mit einer als sogenannte Nierenplatte ausgebildeten Dichtplatte bzw. Dichtsitzscheibe 62 ausgestattet ist, die in den Figuren 7 und 8 detailliert dargestellt ist.

Die Nierenplatte 62 dient als Dichtsitz für das Ventilschließglied 14 bzw. für den in dieses eingebetteten Dichtring und weist im vorliegenden Fall zwei nieren- bzw. linsenförmige Durchbrüche bzw. Kanäle 64 und 66 auf, die entlang einer Kreislinie angeordnet sind, deren Durchmesser im wesentlichen dem mittleren Durchmesser der ringförmigen Stirnfläche 24 des Ventilschließglieds 14 entspricht. Die Durchbrüche 64 und 66 sind durch zwei Stege 68 und 70 voneinander getrennt und münden in eine einen Totvolumenraum darstellende Zentralbohrung 72, die an einem die Abströmseite 34 aufweisenden Bauteil 74 des Gasventils 60 ausgebildet ist und die zu einer nachgeschalteten Drosselbohrung bzw. Düse 76 führt, mittels der der an der Abströmseite 34 herrschende Druck definiert ist. Denkbar ist es auch, mehr als zwei, beispielsweise drei oder vier nierenförmige Durchbrüche bzw. Kanäle in der Nierenscheibe 62 vorzusehen.

Wie Figur 8 zu entnehmen ist, haben die Durchbrüche 64 und 66 abgerundete Einströmkanten 67, die an der in Richtung des Ventilschließglieds 14 weisenden Seite der Nierenplatte 62 angeordnet sind und einen Krümmungsradius von etwa 0,05 mm aufweisen.

Bei Betätigung des Ventilschließglieds strömt Gas aus dem inneren Druckbereich 22 und dem äußeren Druckbereich 20 gleichmäßig über die Durchströmfläche am Dichtsitz und die mittels der Durchbrüche 64 und 66 bereitgestellte Druckfläche in den Totvolumenraum 62 ein. Von dort strömt das Gas über die Drosselbohrung 76 mit Schall- bzw. Überschallgeschwindigkeit an die Abströmseite 34 ab.

Etwaig in dem Gasventil 60 auftretende Verdichtungsstöße sind an die einen Dämpfungsraum bildende Abströmseite 34 verlagert und treten mithin nicht an der Nierenplatte 62 auf. Dies kann dadurch erreicht werden, daß die Durchströmfläche am Dichtsitz bzw. die Fläche der nierenförmigen Durchbrüche 64 und 66 so gewählt ist, daß sie bei einem maximalen Hub des Ventilschließglieds 14 um mindestens den Faktor 2 bis 2,5 größer ist als die Drosselfläche der Düse 76.

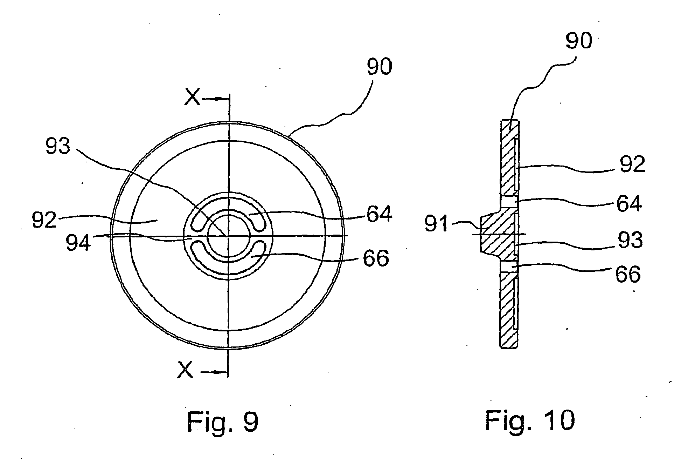

In den Figuren 9 und 10 ist eine alternative Ausführungsform einer Nierenplatte 90 zum Einsatz bei einem Gasventil der in Figur 6 gezeigten Art dargestellt. Die Nierenplatte 90 unterscheidet sich von der in den Figuren 7 und 8 dargestellten Nierenplatte dadurch, daß sie einen Absatz bzw. Sockel 91 aufweist, der in den Totvolumenraum 72 ragt und konisch ausgebildet ist, so daß die zur Befüllung des Totvolumenraums 72 erforderliche Zeit verkürzt werden kann. Ferner dient der Absatz 91 zur Vermeidung von Strömungswirbeln, die beim Öffnen des Ventilschließglieds, insbesondere bei kleinen Ventilhüben, durch Ablösung der Gasströmung entstehen können.

Des weiteren weist die Nierenplatte 90 an der dem Ventilschließglied 14 zugewandten Seite eine ringförmige Vertiefung 92 sowie eine zentral angeordnete, kreisförmige Vertiefung 93 auf, wobei die ringförmige Vertiefung 92 dem äußeren Druckbereich 20 und die kreisförmige Vertiefung 93 dem inneren Druckbereich 22 zugeordnet ist. Zwischen der ringförmigen Vertiefung 92 und der kreisförmigen Vertiefung 93 ist mithin ein Podest 94 ausgebildet, das die Durchbrüche bzw. Kanäle 64 und 66 umgibt.

Die Erfindung ist nicht auf die oben beschriebenen Ausführungsbeispiele beschränkt. Vielmehr kann beispielsweise das in Figur 6 dargestellte Gasventil auch mit einem Ventilschließglied versehen sein, das demjenigen des in Figur 3 dargestellten Gasventils entspricht und mithin mit Abströmbohrungen versehen ist, deren Achsen nicht radial gegenüber der Längsachse des Ventilschließglieds ausgerichtet sind sondern mit letzterer einen spitzen Winkel einschließen. Auch kann das in Figur 6 dargestellte Gasventil mit einem Dichtbereich der in Figur 4 oder 5 dargestellten Art versehen sein. Es kann also einen als Anschlag dienenden Sockel aufweisen, der an der Dichtsitzplatte bzw. Nierenplatte oder auch an dem Ventilschließglied ausgebildet ist und/oder mit einem Dichtring aus einem elastomeren Material versehen ist, der mit Dichtlippen versehen sein kann oder auch plan ausgebildet sein kann. In letzterem Fall sind die Kanten 67 zur Optimierung der Strömungsbedingungen vorzugsweise angeschrägt oder abgerundet.

## Patentansprüche

1. Gasventil, insbesondere mit elektromagnetischer Betätigung, umfassend ein Ventilschließglied (14), das einen Gasstrom von einer Zuströmseite zu einer Abströmseite (34) steuert und mit einem Ventilsitz (26) zusammenwirkt, der an einer Ventilplatte (28, 62, 90) mit mindestens einer Durchströmöffnung (30; 64, 66) ausgebildet ist, die zu der Abströmseite (34) führt, wobei die Zuströmseite stromab mit einem inneren (22) und einem äußeren (20) Druckbereich verbunden ist, welche Druckbereiche (20, 22) stromauf des Ventilsitzes (26) angeordnet sind, wobei der innere Druckbereich (22) einen axialen Druckkanal (19) des Ventilschließglieds (14) umfasst, der an der freien Stirnseite (24) des Ventilschließglieds (14) axial austritt, und der äußere Druckbereich (20) das Ventilschließglied (14) umgibt,
**dadurch gekennzeichnet,**
**dass** das Ventilschließglied (14) eine als Zulaufkanal dienende erste Axialbohrung (16) umfasst, von der wenigstens eine Radialbohrung (18) senkrecht oder zumindest winklig gegenüber der Längsachse des Ventilschließglieds (14) als Abströmbohrung (42) zu dem äußeren Druckbereich (20) abzweigt und in axialer Richtung die erste Axialbohrung (16) in eine zweite Axialbohrung (19) mündet, die den axialen Druckkanal (19) zu dem inneren Druckbereich (22) darstellt.

2. Gasventil nach Anspruch 1, **dadurch gekennzeichnet, dass** das Ventilschließglied (14) stirnseitig eine als Ringfläche ausgebildete Dichtfläche aufweist.

3. Gasventil nach Anspruch 1 oder 2, **dadurch gekennzeichnet, dass** der innere Druckbereich (22) über mindestens einen in dem Ventilschließglied (14) ausgebildeten Abströmkanal (18) mit dem äußeren Druckbereich (20) verbunden ist.

4. Gasventil nach einem der Ansprüche 1 bis 3, **dadurch gekennzeichnet, dass** die Ventilplatte (28, 62, 90) mindestens zwei Durchströmöffnungen (30; 64, 66) aufweist, die mittels der Dichtfläche abdeckbar sind.

5. Gasventil nach Anspruch 4, **dadurch gekennzeichnet, dass** die Durchströmöffnungen (64, 66) nieren- bzw. linsenförmig ausgebildet sind und zu einem Totvolumenraum (72) führen.

6. Gasventil nach Anspruch 4 oder 5, **dadurch gekennzeichnet, dass** stromab der Durchströmöffnungen (64, 66) und stromauf der Abströmseite (34) eine Drosselbohrung (76) angeordnet ist.

7. Gasventil nach Anspruch 5 oder 6, **dadurch gekennzeichnet, dass** an der Ventilplatte (90) ein vorzugsweise konischer Absatz (91) ausgebildet ist, der in den Totvolumenraum (72) ragt.

8. Gasventil nach Anspruch 4, **dadurch gekennzeichnet, dass** die Durchströmöffnungen (30) entlang einer Kreislinie als Düsen ausgebildet sind.

9. Gasventil nach einem der Ansprüche 1 bis 8, **dadurch gekennzeichnet, dass** an der Dichtfläche des Ventilschließglieds (14) eine Elastomerdichtung (36, 52) angeordnet ist.

10. Gasventil nach Anspruch 9, **dadurch gekennzeichnet, dass** die Elastomerdichtung (52) mindestens eine Dichtlippe (54, 56) aufweist.

11. Gasventil nach einem der Ansprüche 1 bis 10, **gekennzeichnet durch** einen als Anschlag für den Ventilschließkörper (14) dienenden Sockel (44).

12. Gasventil nach einem der Ansprüche 1 bis 11, **dadurch gekennzeichnet, dass** an der Dichtplatte (28) Schürzen (46) zum Eingriff in die Elastomerdichtung (36) ausgebildet sind.

13. Gasventil nach einem der Ansprüche 1 bis 12, **dadurch gekennzeichnet, dass** die zweite Axialbohrung (19) im Ventilschließglied (14) einen geringeren Durchmesser aufweist als den Durchmesser der ersten Axialbohrung (16).

## Claims

1. Gas valve, in particular with electromagnetic actuation, comprising a valve closing member (14) which controls a gas stream from an inflow side to an outflow side (34) and interacts with a valve seat (26) which is formed on a valve plate (28, 62, 90) with at least one throughflow opening (30; 64, 66) which leads to the outflow side (34), the inflow side being connected downstream to an inner (22) and an outer (20) pressure region, which pressure regions (20, 22) are arranged upstream of the valve seat (26), the inner pressure region (22) comprising an axial pressure channel (19) of the valve closing member (14) which axial pressure channel (19) exits axially on the free end side (24) of the valve closing member (14), and the outer pressure region (20) surrounding the valve closing member (14), **characterized in that** the valve closing member (14) comprises a first axial hole (16) which serves as inlet channel and from which at least one radial hole (18) branches off perpendicularly or at least at an angle with respect to the longitudinal axis of the valve closing member (14) as outflow hole (42) to the outer pressure region (20), and the first axial hole (16) opens in the axial direction into a second axial hole (19) which represents the axial pressure channel (19) to the inner pressure region (22).

2. Gas valve according to Claim 1, **characterized in that**, on the end side, the valve closing member (14) has a sealing face which is configured as an annular face.

3. Gas valve according to Claim 1 or 2, **characterized in that** the inner pressure region (22) is connected to the outer pressure region (20) via at least one outflow channel (18) which is formed in the valve closing member (14).

4. Gas valve according to one of Claims 1 to 3, **characterized in that** the valve plate (28, 62, 90) has at least two throughflow openings (30; 64, 66) which can be covered by means of the sealing face.

5. Gas valve according to Claim 4, **characterized in that** the throughflow openings (64, 66) are of kidney-shaped or lenticular configuration and lead to a dead volume space (72).

6. Gas valve according to Claim 4 or 5, **characterized in that** a restrictor bore (76) is arranged downstream of the throughflow openings (64, 66) and upstream of the outflow side (34).

7. Gas valve according to Claim 5 or 6, **characterized in that** a preferably conical shoulder (91) which protrudes into the dead volume space (72) is formed on the valve plate (90).

8. Gas valve according to Claim 4, **characterized in that** the throughflow openings (30) are formed as nozzles along a circular line.

9. Gas valve according to one of Claims 1 to 8, **characterized in that** an elastomer seal (36, 52) is arranged on the sealing face of the valve closing member (14).

10. Gas valve according to Claim 9, **characterized in that** the elastomer seal (52) has at least one sealing lip (54, 56).

11. Gas valve according to one of Claims 1 to 10, **characterized by** a base (44) which serves as stop for the valve closing body (14).

12. Gas valve according to one of Claims 1 to 11, **characterized in that** aprons (46) for engagement into the elastomer seal (36) are formed on the sealing plate (28).

13. Gas valve according to one of Claims 1 to 12, **characterized in that** the second axial hole (19) in the valve closing member (14) has a smaller diameter than the diameter of the first axial hole (16).

## Revendications

1. Vanne à gaz, en particulier à actionnement électromagnétique, comprenant un obturateur de vanne (14) qui commande un flux de gaz depuis un côté d'amenée jusqu'à un côté de sortie (34) et qui coopère avec un siège de vanne (26) formé sur une plaque de vanne (28, 62, 90) pourvue d'au moins une ouverture de passage d'écoulement (30 ; 64, 66) qui conduit vers le côté de sortie (34), le côté d'amenée étant relié en aval avec une région de pression interne (22) et avec une région de pression externe (20), ces deux régions de pression (20, 22) étant disposées en amont du siège de vanne (26), la région de pression interne (22) comportant un canal de pression axial (19) de l'obturateur de vanne (14) qui débouche axialement au niveau de la face avant libre (24) de l'obturateur de vanne (14), et la région de pression externe (20) entourant l'obturateur de vanne (14),
**caractérisée en ce que**
l'obturateur de vanne (14) comprend un premier alésage axial (16) servant de canal d'amenée, depuis lequel au moins un alésage radial (18) part perpendiculairement ou au moins suivant un certain angle par rapport à l'axe longitudinal de l'obturateur de vanne (14) sous forme d'alésage d'écoulement (42) vers la région de pression externe (20), et le premier alésage axial (16) débouche dans la direction axiale dans un deuxième alésage axial (19) qui constitue le canal de pression axial (19) allant vers la région de pression interne (22).

2. Vanne à gaz selon la revendication 1, **caractérisée en ce que** l'obturateur de vanne (14) présente, sur la face frontale, une surface d'étanchéité réalisée sous forme de surface annulaire.

3. Vanne à gaz selon la revendication 1 ou 2, **caractérisée en ce que** la région de pression interne (22) est raccordée par le biais d'au moins un canal d'écoulement (18) réalisé dans l'obturateur de vanne (14) à la région de pression externe (20).

4. Vanne à gaz selon l'une quelconque des revendications 1 à 3, **caractérisée en ce que** la plaque de vanne (28, 62, 90) présente au moins deux ouvertures de passage d'écoulement (30 ; 64, 66) qui peuvent être recouvertes au moyen de la surface d'étanchéité.

5. Vanne à gaz selon la revendication 4, **caractérisée en ce que** les ouvertures de passage d'écoulement (64, 66) sont réalisées en forme de haricot ou de lentille et conduisent à un espace de volume mort (72).

6. Vanne à gaz selon la revendication 4 ou 5, **caractérisée en ce qu'**en aval des ouvertures de passage d'écoulement (64, 66) et en amont du côté de sortie (34) est disposé un alésage d'étranglement (76).

7. Vanne à gaz selon la revendication 5 ou 6, **caractérisée en ce qu'**un épaulement de préférence conique (91) est réalisé sur la plaque de vanne (90), lequel épaulement pénètre dans l'espace de volume mort (72).

8. Vanne à gaz selon la revendication 4, **caractérisée en ce que** les ouvertures de passage d'écoulement (30) sont réalisées le long d'un cercle sous la forme de buses.

9. Vanne à gaz selon l'une quelconque des revendications 1 à 8, **caractérisée en ce qu'**un joint d'étanchéité élastomère (36, 52) est disposé sur la surface d'étanchéité de l'obturateur de vanne (14).

10. Vanne à gaz selon la revendication 9, **caractérisée en ce que** le joint d'étanchéité élastomère (52) présente au moins une lèvre d'étanchéité (54, 56).

11. Vanne à gaz selon l'une quelconque des revendications 1 à 10, **caractérisée par** un socle (44) servant de butée pour l'obturateur de vanne (14).

12. Vanne à gaz selon l'une quelconque des revendications 1 à 11, **caractérisée en ce que** des jupes (46) sont réalisées sur la plaque de vanne (28) pour venir en prise dans le joint d'étanchéité élastomère (36).

13. Vanne à gaz selon l'une quelconque des revendications 1 à 12, **caractérisée en ce que** le deuxième alésage axial (19) présente dans l'obturateur de vanne (14) un plus petit diamètre que le diamètre du premier alésage axial (16).
